# EUROPÄISCHE PATENTSCHRIFT

(11) **EP 1 743 099 B1**
(45) Veröffentlichungstag und Bekanntmachung des Hinweises auf die Patenterteilung: **11.09.2013**
(21) Anmeldenummer: 05741335.3
(22) Anmeldetag: 03.05.2005
(51) Int. Cl.: F04B 19/24

(54) **DOSIERPUMPE, INSBESONDERE FÜR SCHMIERSTOFFE, MIT DEHNSTOFFANTRIEB, SCHMIERSTOFFBEHÄLTER FÜR DIE DOSIERPUMPE SOWIE SCHMIERVERFAHREN**
METERING PUMP, ESPECIALLY FOR LUBRICANTS, WITH EXPANSION DRIVE, AND LUBRICANT RESERVOIR FOR SAID METERING PUMP AND LUBRICATION METHOD
POMPE DE DOSAGE, NOTAMMENT POUR LUBRIFIANTS, A COMMANDE DE DILATATION, ET RESERVOIR DE LUBRIFIANT POUR LADITE POMPE DE DOSAGE ET PROCEDE DE LUBRIFICATION

(30) Priorität: 06.05.2004 DE 102004023019
(43) Veröffentlichungstag der Anmeldung: 17.01.2007
(73) Patentinhaber: SKF Lubrication Systems Germany AG, 12277 Berlin (DE)
(72) Erfinder: PRZYBYLSKY, Michael, 13505 Berlin (DE)
(74) Vertreter: Grünecker, Kinkeldey, Stockmair & Schwanhäusser
(86) Internationale Anmeldenummer: PCT/EP2005/004791
(87) Internationale Veröffentlichungsnummer: WO 2005/108849

(56) Entgegenhaltungen:
- EP-A- 0 376 815
- WO-A-98/38453
- GB-A- 1 187 637
- US-A- 3 686 857

## Beschreibung

Die Erfindung betrifft eine Dosierpumpe, durch die eine vorbestimmte Menge Schmierstoff an eine Schmierstelle dosiert abgebbar ist, mit wenigstens einem, durch wenigstens eine Betätigungseinrichtung antreibbaren Dosierkolben, wobei ein im Betrieb mit Schmierstoff gefüllter Bereich eines Zylinders der Dosierpumpe, in dem der Dosierkolben sich bewegt, als Dosierkammer dient, in der die zu dosierende Schmierstoffmenge aufzunehmen ist, und wobei ein Hub des Dosierkolbens durch einen Anschlag begrenzt ist, sowie ein Schmierverfahren, vorzugsweise zum Langzeitschmieren wenigstens einer Schmierstelle, wobei in vorbestimmten Zeitintervallen ein Schmierstoff durch einen Dosierkolben dosiert an die wenigstens eine Schmierstelle abgegeben wird.

Derartige Dosierpumpen werden beispielsweise für die Schmierung von Maschinenelementen wie Linearführungseinheiten und Kugelumlaufspindeln in Werkzeugmaschinen mit einem Schmierstoff wie Öl, Fliesfett oder Fett verwendet. Nachteilig ist jedoch bei den Zentralschmieranlagen, dass die Leitungen von der zentralen Dosierpumpe zu den Schmierstellen in den Maschinenelementen sehr lang sind. Aufgrund der Schmierung mit nur sehr kleinen Schmierstoffmengen in großen Zeitabständen kann der Schmierstoff auf dem Weg zur Schmierstelle altern. Um dies zu verhindern, können die Maschinenelemente dezentral mit Schmierstoff versorgt werden.

Eine derartige dezentrale Versorgung der Maschinenelemente wird speziell bei Linearführungen durch sogenannte Vorsatzelemente erreicht. Ein Vorsatzelement weist ein Schmierstoffreservoir auf, aus dem der Schmierstoff im Zuge der Bewegung der Linearführung pumpenfrei gefordert wird. Die Vorsatzelemente bevorraten Schmierstoff für eine Betriebsdauer von bis zu drei Jahren, so dass die Linearführungen wahrend dieser drei Jahre nicht gewartet werden müssen. Durch die Verwendung der Vorsatzelemente kann zum einen auf eine bezüglich der Anschaffungskosten teurere Zentralschmieranlage verzichtet werden. Zum anderen kann der Schmierstoff in den kurzen Leitungen von den Vorsatzelementen zu den Schmierstellen nicht altern. Nachteilig ist jedoch bei den Vorsatzelementen, dass sie nur begrenzte Schmieraufgaben bewältigen können. So ist es z. B. in Werkzeugmaschinen bei dem Einsatz von Kühlemulsionen problematisch, wenn die Kühlemulsion den Schmierstoff auf der Linearführung mehr oder weniger stark abwäscht.

Hinsichtlich der dezentralen Schmierung wird im Stand der Technik auch auf dezentrale Dosierpumpen mit Hubmagneten als Betätigungseinrichtung zurückgegriffen. Diese Dosierpumpen sind jedoch teuer und für eine Integration in ein Maschinenelement oftmals zu groß.

In der GB 1, 187,637 A ist beispielsweise eine automatische Schmiervorrichtung mit einer Dosierpumpe beschrieben. Eine weitere Schmierstoffpumpe ist in der EP 0 376 815 und eine Betätigungseinrichtung ist in der US 3,686,857 beschrieben.

Ein Nachteil der bislang verwendeten Dosierpumpen in den Vorsatzelementen besteht darin, dass der benötigte Einbauraum für die Dosierpumpen relativ groß ist. die mit den dezentralen Dosierpumpen ausgestatteten Linearführungseinheiten und Kugelumlaufspindeln benötigen daher zusätzlichen Einbauraum in der Werkzeugmaschine, was ebenfalls unerwünscht ist.

Folglich liegt der Erfindung die Aufgabe zugrunde, eine Dosierpumpe und ein Schmierverfahren zu schaffen, welche eine kompaktere Bauweise aufweisen, so dass eine dezentrale Schmierung und eine Integration der Dosierpumpe in die zu schmierenden Maschinenelemente möglich ist.

Erfindungsgemäß wird diese Aufgabe für die eingangs genannte Dosierpumpe dadurch gelöst, dass die Betätigungseinrichtung wenigstens ein Heizelement und ein durch das Heizelement aufheizbares Dehnstoffelement umfasst und dass der Anschlag im Bereich einer Einlaufkontur des Zylinders angeordnet ist.

Für das eingangs genannte Verfahren wird die Aufgabe erfindungsgemäß dadurch gelöst, dass ein Dehnstoffelement ausgeheizt wird, um den Dosierkolben zu bewegen.

Durch diese überraschend einfache konstruktive Maßnahme lässt sich die Baugröße der Dosierpumpen erheblich verringern, da das Dehnstoffelement als Aktuator eine sehr hohe Kraftdichte aufweist, also ein pro erzeugter Krafteinheit geringes Bauvolumen. Dies ermöglicht den Einbau der Dosierpumpe in noch kleinere Einbauräume und die Ausstattung auch kleinerer Linearführungseinheiten oder Kugelspindeltriebe, die bislang nur durch eine Zentralschmieranlage geschmiert werden konnten, mit den erfindungsgemäßen Dosierpumpen. Ein weiterer Vorteil des Antriebs mittels eines Dehnstoffelements liegt ferner darin, dass der beispielsweise zum Antrieb von herkömmlichen Hubmagneten verwendete Antriebsstrom ohne wesentliche Veränderung zum Heizen des

Heizelements eingesetzt werden kann. Die erfindungsgemäße Dosierpumpe kann damit die herkömmlichen Dosierpumpen vollständig ersetzen, ohne dass auf Seiten der die Dosierpumpe steuernden Steuereinheit Anpassungen notwendig werden.

Der im Dehnstoffelement eingesetzte Dehnstoff weist einen hohen Wärmeausdehnungskoeffizienten auf und dehnt sich demzufolge bei der Erwärmung so stark aus, dass er den Dosierkolben bewegt. Beispielsweise kann als Dehnstoff ein Wachs verwendet werden, das beim Aufheizen des Heizelements schmilzt und sich ausdehnt. Der Dehnstoff ist in einer Kammer des Dehnstoffelements aufgenommen, in die auch der Dosierkolben oder ein mit den Dosierkolben bewegungsstarr verbundener Arbeitskolben ragt, welcher bei der Ausdehnung des Dehnstoffes aus der Kammer gedrückt wird. Um Fertigungskosten zu sparen, können handelsübliche Dehnstoffelemente in die Dosierpumpe eingesetzt werden, wie sie bei Thermostaten für Kraftfahrzeuge üblich sind.

Die Dosierpumpe kann in einer weiteren Ausgestaltung wenigstens einen Zylinder aufweisen, in dem der Dosierkolben verschieblich aufgenommen ist. Der Zylinder kann spritztechnisch erzeugt sein, beispielsweise im Spritzgussverfahren. Der Zylinder kann insbesondere mit einem Gehäuse der Pumpe einteilig ausgeformt und in das Gehäuse integriert sein, so dass sich die Anzahl der verwendeten Bauteile verringert und sich die Montagezeit verkürzt. Der Zylinder, und gegebenenfalls das Gehäuse, können insbesondere aus einem Kunststoff, wie einem glasfaserverstärkten Polymer, beispielsweise Polyamid oder einem anderen geeigneten Material, gefertigt sein. Alternativ kann auch eine den Zylinder bildende Kunststoffbuchse verwendet werden, die beispielsweise in eine entsprechende Ausnehmung des Gehäuses eingesetzt ist und in der der Kolben verschieblich aufgenommen ist. Die Buchse kann vorzugsweise aus einem Kunststoff wie glasfaserverstärktem Polyamid oder einem anderen geeigneten Material gefertigt sein.

Der im Betrieb mit Schmierstoff gefüllte Bereich des Zylinders, in dem der Dosierkolben sich bei der Beheizung des Dehnstoffelementes bewegt, dient als Dosierkammer, in der die zu dosierende Schmierstoffmenge aufgenommen ist.

Die Temperaturdifferenzen, die während des Aufheizens des Dehnstoffelements auftreten, erfordern am Dosierkolben größere Spaltmaße, um die unterschiedliche Wärmeausdehnung von Dosierkolben und Zylinder zu berücksichtigen. Außerdem ist die Reaktionszeit des Dehnstoffantriebes und damit der Druckaufbau im Zylinder im Vergleich zum Antrieb mittels Hubzyiinder so langsam, dass der Schmierstoff durch den Spalt zwischen Dosierkolben und Zylinder abfließt und die Dosiergenauigkeit beeinflusst, wenn keine Gegenmaßnahmen ergriffen werden. Die bei Dosierpumpen üblichen Spaltdichtungen mit entsprechend geringen Toleranzen können damit nicht mehr verwendet werden: In einer vorteilhaften Ausgestaltung ist daher ein in radialer Richtung des Kolbens nachgiebiges Dichtelement im Spalt zwischen Dosierkolben und Zylinder vorgesehen, um bei den verschiedenen Temperaturen Leckageverluste zu vermeiden. Eine derartige Ausgestaltung hat gegenüber der Spaltdichtung gleichzeitig den Vorteil, dass gröbere Toleranzen für Kolben und Zylinder verwendet werden können, was die Fertigungskosten nochmals verringert. Alternativ können Dosierkolben und Zylinder auch mit einer Spaltdichtung, d. h. mit einem Spiel zueinander ausgebildet sein, das den Zylinder gegenüber den Dosierkolben schmiermitteldicht verschließt.

Um gleichzeitig mehrere Schmierstellen versorgen zu können, kann die Dosierpumpe in einer weiteren vorteilhaften Ausgestaltung eine Mehrzahl von Dosierkolben aufweisen, die von der Betätigungseinrichtung gemeinsam antreibbar angeordnet sind. Dies kann beispielsweise in einer Weiterbildung dadurch realisiert sein, dass zwischen der Betätigungseinrichtung und dem Dosierkolben ein die Mehrzahl der Dosierkolben bewegungsstarr verbindendes Übertragungselement angeordnet ist. In einer anderen Ausführung kann aber auch ein einzelner Dosierkolben mehrere Schmierstellen versorgen, indem das Hubvolumen des Dosierkolbens über von einer Dosiereinrichtung gesteuert geöffnete Steuerbohrungen auf die jeweiligen Schmierstellen aufgeteilt wird. Ebenso können mehrere Dosierkolben einer einzigen Schmierstelle zugeordnet sein, wenn diese beispielsweise einen Schmierstoffbedarf aufweist, der ein Mehrfaches der Förderleistung eines Dosierkolbens beträgt.

Um Schmierstoff an den Dosierkolben heranzuführen, kann im Bereich des Kolbenhubes eine Speiseleitung münden, die im Mündungsbereich mit einer Einlaufkontur versehen ist. Durch die Einlaufkontur wird verhindert, dass eine sich mit dem Dosierkolben über die Mündung der Speiseleitung bewegende Dichtung abnutzt und verschleißt. Die Einlaufkontur kann in Form eines Radius oder einer Fase ausgestaltet sein. Wird eine Mehrzahl von Dosierkolben verwendet, so können die zu verschiedenen Dosierkolben führenden Speiseleitungen in einer gemeinsamen Schmierstoffkammer bzw. Verteilerkammer enden. Durch die Anordnung der Mündung im Bereich des Kolbenhubes, vorzugsweise im Anfangsbereich des Kolbenhubes, wird die Speiseleitung automatisch durch den Dosierkolben verschlossen, wenn der Schmierdruck aufgebaut wird. Durch diese Maßnahme kann kein Schmierstoff zurück in die Speiseleitung dringen, was die Dosiermenge ansonsten verringern und zu einer unzureichenden Schmierung der Schmierstelle führen würde. Die Dosiermenge des bei einem Kolbenhub an die Schmierstelle geförderten Schmierstoffs bestimmt sich aus dem Teil des Hubvolumens des Dosierkolbens von dem Punkt des Kolbenhubes an, ab dem die Verbindung zwischen der Speiseleitung und dem Ausstoß geschlossen ist, bis zu der Endlage des Dosierkolbens.

Gemäß einer weiteren Ausgestaltung kann in einem Schmierstoffauslass, durch den Schmierstoff aus der Dosierpumpe abgeleitet wird, ein Rückschlagventil angeordnet sein, das bei durch die Betätigungseinrichtung bewegtem Dosierkolben mittelbar durch den geförderten Schmierstoff in den geöffneten Zustand überführbar ausgestaltet ist. Durch das Rückschlagventil wird vermieden, dass ein sich schmierstellenseitig aufbauender Druck Schmierstoff zurück in Richtung des Dosierkolbens fördert und dass beim Rückhub des Kolbens der Schmierstoff wieder zurückgesaugt wird.

Um zu vermeiden, dass der Dehnstoff im Dehnstoffelement durch Überhitzung beschädigt wird, kann insbesondere ein PTC-Element als Heizelement verwendet werden. Da die Widerstandskurve eines PTC-Elements ab einer von der Zusammensetzung des PTC-Elements abhängigen Grenztemperatur sprunghaft ansteigt, heizt sich das PTC-Element nur bis zu dieser Grenztemperatur auf. Wird gemäß einer weiteren Ausgestaltung der Erfindung die Grenztemperatur des PTC-Elements an die thermischen Eigenschaften des Dehnstoffes angepasst, kann auf einfache Weise ein Verbrennen oder Zersetzen des Dehnstoffes aufgrund zu hoher Heiztemperaturen verhindert werden, ohne dass eine aufwendige Temperatursteuerung vorgesehen werden muss.

Um den Dosierkolben nach der Betätigung des Dehnstoffelements wieder in seine ursprüngliche Lage zurückzubewegen, kann ferner eine Rückstelleinrichtung vorgesehen sein, durch die eine der Betätigungseinrichtung entgegenwirkende Rückstellkraft erzeugbar ist. Eine solche Rückstelleinrichtung kann beispielsweise ein Federelement umfassen. Damit die Betätigungseinrichtung jedoch nicht gegen die Rückstellkraft arbeiten muss, kann die Rückstelleinrichtung in einer weiteren vorteilhaften Ausgestaltung einen Aktuator vorzugsweise in Form eines weiteren Dehnstoffantriebes aufweisen, der der Betätigungseinrichtung entgegenwirkt. Dieser Aktuator wird abwechselnd zur Betätigungseinrichtung betätigt, um den Dosierkolben in seine Ausgangsstellung zurück zu bewegen.

Um die Bewegung des Dosierkolbens exakt auszuführen, kann in jeder Richtung der Kolbenbewegung ein Anschlag vorgesehen sein, der den Kolbenhub begrenzt. Die maximal möglichen Arbeitshübe der Betätigungseinrichtung und gegebenenfalls der Rückstelleinrichtung sind dabei so bemessen, dass sie über die Anschläge jeweils hinausgehen. Dadurch wird sichergestellt, dass die Anschläge vom Dosierkolben auch erreicht werden. Die Anschläge können mit dem Arbeitskolben, dem Dosierkolben oder einem zwischen diesen angeordneten Bewegungsübertragungselement zusammenwirken.

Die folgenden Ausgestaltungen befassen sich mit Verbesserungen an der Dosierpumpe, durch die eine Verlängerung des Wartungsintervalles der Dosierpumpen über die von den Herstellern garantierte Haltbarkeitsdauer des Schmierstoffes hinaus möglich ist.

Bei den bislang verwendeten Schmiersystemen mit Vorsatzelementen ist es nämlich von Nachteil, dass die Vorsatzelemente spätestens nach drei Jahren ausgetauscht werden müssen. Diese Zeitdauer entspricht in etwa der Haltbarkeit des Schmierstoffes.

Der Austausch der Vorsatzelemente erfordert allerdings eine Demontage der Werkzeugmaschine. Aufgrund des Maschinenstillstands während des Austauschs der Vorsatzelemente und aufgrund der hohen Lohn- und Ersatzteilkosten führt dies nach Ablauf der Garantiefrist von drei Jahren zu hohen Kosten.

Um dieses Problem zu beheben, betrifft die Erfindung ferner einen Schmierstoffbehälter, der mit der Dosierpumpe in einer der oben beschriebenen Ausführungen verwendbar ausgestaltet und an der Dosierpumpe auswechselbar und luftdicht anbringbar ist. Der Schmierstoffbehälter weist ein wenigstens teilweise mit einem Schmierstoff gefülltes Vorratsvolumen auf.

Aufgrund der luftdichten Befestigung des Vorratsvolumens an der Dosierpumpe können die Wartungsintervalle der Dosierpumpe bzw. des die Dosierpumpe verwendenden Maschinenelements über die eigentliche Haltbarkeit des Schmierstoffes hinaus ausgedehnt werden. Durch den luftdichten Abschluss des Vorratsvolumens können Umwelteinflüsse den Schmierstoffes nicht angreifen, der Schmierstoff kann insbesondere weder oxidieren noch sich zersetzen. Hierzu kann das Vorratsvolumen so bemessen sein, dass die in ihm aufgenommene Schmierstoffmenge für einen unterbrechungsfreien Schmierbetrieb der Dosierpumpe im Normalbetrieb über wenigstens fünf Jahre ausreicht. Alternativ können auch standardisierte Schmierstoffbehälter mit kleineren Vorratsvolumen für z. B. einen wartungsfreien betrieb von wenigstens 3 Jahren für ein Lager verwendet werde.

In den Schierstoffbehälter kann ferner ein das Vorratsvolumen unter Druck setzendes Fördermittel, beispielsweise in Form eines durch eine Feder vorgespannten Kolbens, integriert sein, das den im Vorratsvolumen enthaltenen Schmierstoff unter Druck setzt. Durch diese Maßnahme wird die selbsttätige Ansaugung des Schmierstoffes durch den beim Rückhub des Kolbens erzeugten Unterdruck unterstützt.

Um bei der Lagerung des Schmierstoffbehälters den Schmierstoff im Vorratsvolumen nicht schädigenden Umwelteinflüssen auszusetzen, kann eine Abgabeöffnung des Vorratsvolumens, durch die der Schmierstoff im Betrieb an die Dosierpumpe abgebbar ist, durch eine vorzugsweise bei der Montage des Schmierstoffbehälters auf der Dosierpumpe sich selbsttätig öffnende Verschlusseinrichtung verschlossen sein. Diese Verschlusseinrichtung kann beispielsweise in Form einer einreißbaren Membran, einer Gusshaut, in Form einer von der Dosierpumpe gegen den Druck des Druckerzeugungsmittels geöffneten Klappe oder einer durch einen in der Abgabeöffnung formschlüssig gehaltenen Verschlusskörper, beispielsweise eine Kugel, ausgestaltet sein. Auch ein Rückschlagventil, das durch die vom Fördermittel erzeugte Kraft in die Schließstellung gedrückt ist, kann in die Abgabeöffnung integriert sein.

An der Dosierpumpe kann eine entsprechende Öffnungseinrichtung vorgesehen, durch die die Verschlusseinrichtung in die Offenstellung, vorzugsweise gegen den von dem Fördermittel im Schmierstoffbehälter erzeugten Druck überführt wird. Die Öffnungseinrichtung kann insbesondere in Form eines in die Abgabeöffnung ragenden Dorns oder Stiftes ausgestaltet sein.

Das Vorratsvolumen kann schließlich in einer weiteren vorteilhaften Ausgestaltung des Schmierstoffbehälters in einer auswechselbaren Kartusche ausgebildet sein. Die Kartusche kann aus einem im wesentlichen elastischen Behälter aus einem elastisch dehnbaren oder sich ziehharmonikaartig zusammenfaltbaren Material gefertigt sein, so dass mit zunehmender Entleerung sich keine luftgefüllten Leerräume bilden. Die Kartusche kann gemäß dieser Ausgestaltung in den Schmierstoffbehälter eingesetzt und nach Entleerung ausgetauscht werden. Der Schmierstoffbehälter kann eine Aufnahme für die Kartusche aufweisen, wobei die Aufnahme von dem Fördermittel begrenzt sein kann, um die Kartusche unter Druck zu setzen.

Für Anwendungen, in denen insbesondere nur sehr wenig Einbauraum zur Verfügung steht, kann die erfindungsgemäße Dosierpumpe einen Schmierstoffbehälter aufweisen, der innerhalb des Gehäuses der Dosierpumpe integriert ist. Das Vorratsvolumen des Schmierstoffbehälters ist mit dem Zylinder der Dosierpumpe verbunden, wodurch der im Vorratsvolumen befindliche Schmierstoff in den Zylinder einleitbar ist. Ein besonders kompaktes Aggregat entsteht, wenn der Dosierkolben vom Schmierstoffbehälter umgeben ist. Das Gehäuse der Dosierpumpe, die Umfangsfläche des Zylindergehäuses und der Schmierstoffbehälter können beispielsweise zylindrisch ausgebildet und/oder konzentrisch zueinander angeordnet sein, so dass eine kompakte, patronenförmige Dosierpumpe entsteht.

Um eine Wiederbefüllung des Zylinders der Dosierpumpe mit Schmierstoff nach einer Betätigung sicher zu stellen, kann im Schmierstoffbehälter ein im Wesentlichen in Richtung des Vorratsvolumens vorgespannter Kolben beweglich angeordnet sein. Der Kolben kann beispielsweise durch ein Federelement das Vorratsvolumen unter Druck setzen, so dass Schmierstoff aus dem Vorratsvolumen in den Zylinder strömen kann.

Der Kolben kann um das Zylindergehäuse herum beweglich angebracht sein. Dies hat den Vorteil, dass das Zylindergehäuse gleichzeitig als ein konstruktiv einfaches Führungselement für den Kolben des Schmierstoffbehälters ausgebildet ist. Die Größe der aneinandergrenzenden Führungsflächen zwischen dem Kolben und dem Zylindergehäuse sind dabei so groß ausgelegt, dass ein Verkanten des Kolbens unmöglich ist. Um eine zusätzliche Führungsfläche für den Kolben am Außendurchmesser auszubilden, kann der Kolben axial beweglich an der Innenseiten des Gehäuses der Dosierpumpe angeordnet sein. Ferner kann der Kolben als ein Ringkolben ausgebildet sein, der als ein rotationssymmetrisches Drehteil besonders kostengünstig herstellbar ist.

Um das Vorratsvolumen des Schmierstoffbehälters mit Schmierstoff von außen befüllen zu können, kann die Dosierpumpe einen Schmierstoffeinlass aufweisen, durch den der Schmierstoff in das Vorratsvolumen einleitbar ist. So kann diese Ausgestaltung der Dosierpumpe nach einer vorbestimmbaren Anwendungsdauer bzw. Anzahl von Betätigungen, wenn das Vorratsvolumen im Wesentlichen leer ist, wiederbefüllt und erneut verwendet werden. Besonders vorteilhaft ist es, wenn in dem Schmierstoffeinlass ein Rückschlagventil angeordnet ist, dass ein Entweichen von Schmierstoff aus dem Vorratsvolumen verhindert und das Befüllen erleichtert. Dieses Rückschlagventil kann beispielsweise als ein Schmiernippel ausgebildet sein. Alternativ kann der Schmierstoffeinlass auch durch einen eingeschraubten Verschlussstopfen während des Betriebs verschlossen sein.

Im Folgenden wird die Erfindung anhand unterschiedlicher Ausführungsformen mit Bezug auf die Zeichnungen beispielhaft erläutert. Wie oben beschrieben ist, können dabei die bei den einzelnen Ausführungsformen unterschiedlichen Merkmale beliebig miteinander kombiniert oder auch weggelassen werden, wenn der mit dem jeweiligen Merkmal verbundene Vorteil im speziellen Anwendungsfall nicht von Bedeutung ist.

Es zeigen:
- Fig. 1: eine schematische Schnittansicht einer ersten Ausführungsform einer erfindungsgemäßen Dosierpumpe;
- Fig. 2: eine schematische Schnittansicht von zwei Varianten einer erfindungsgemäßen Dosierpumpe;
- Fig. 3: eine schematische Schnittansicht einer weiteren Variante der erfindungsgemäβen Dosierpumpe;
- Fig. 4: die Dosierpumpe der Fig. 2 in einer Ansicht entlang des Schnittes III-III der Fig. 2;
- Fig. 5: eine schematische Schnittansicht eines Schmierstoffbehälters mit einer Kartusche;
- Fig. 6: eine schematische Schnittansicht einer weiteren Variante einer Kartusche;
- Fig. 7: eine schematische Schnittansicht einer weiteren Variante der erfindungemäßen Dosierpumpe.

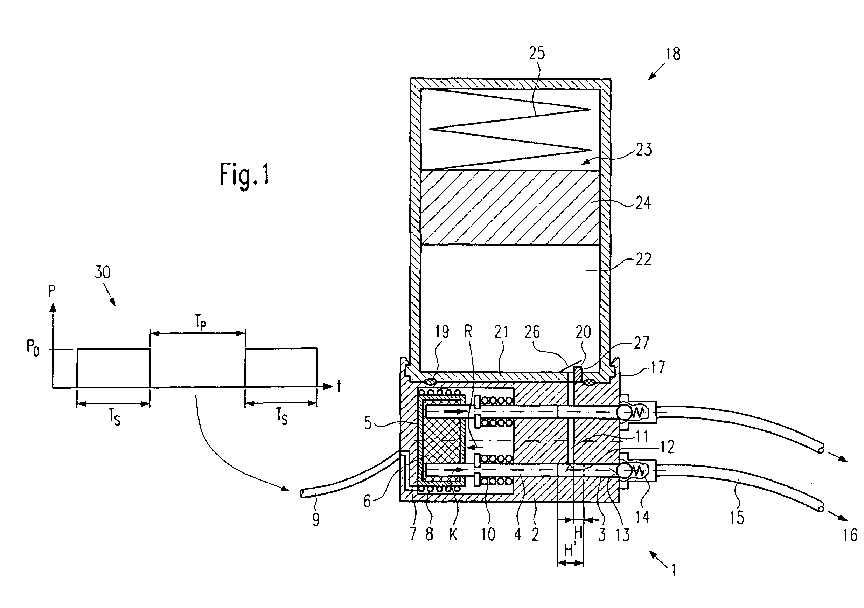

Zunächst wird der Aufbau einer erfindungsgemäßen Dosierpumpe 1 anhand der Fig. 1 beschrieben, die die Dosierpumpe 1 schematisch in einem Längsschnitt zeigt.

Die Dosierpumpe 1 weist ein Gehäuse 2 auf, in dem ein oder mehrere Zylinder 3 angeordnet sind. Im Folgenden wird der Aufbau am Beispiel lediglich eines Zylinders 3 beschrieben. In dem Zylinder 3 ist ein Ende eines Dosierkolbens 4 verschieblich aufgenommen.

Das Gehäuse 2 ist vorzugsweise aus einem Kunststoff mit geringer Wärmeleitfähigkeit gefertigt. Die Zylinder 3 sind aus Metall oder einem festen Kunststoff wie beispielsweise einem glasfaserverstärkten Polymer, wie Polyamid, gefertigt. Der Zylinder 3 kann insbesondere einteilig mit dem Gehäuse 2 ausgeformt sein, beispielsweise durch ein Spritzgussverfahren. Eine Nachbearbeitung der Zylinderinnenwand ist dabei nicht notwendig.

Am anderen Ende des Dosierkolbens 4 greift eine Betätigungskraft K an, die den Dosierkolben 4 in den Zylinder 3 schiebt. Die Betätigungskraft K wird von einer Betätigungseinrichtung 5 erzeugt.

Erfindungsgemäß ist die Betätigungseinrichtung 5 als Dehnstoffantrieb ausgestaltet und beinhaltet einen in einer Kammer 6 aufgenommenen Dehnstoff, beispielsweise ein Wachsmaterial. Das vom Zylinder 3 abgewandte Ende des Dosierkolbens 4 ragt bei dem in Fig. 1 dargestellten Ausführungsbeispiel in die Dehnstoffkammer 6. Der Dehnstoff in der Kammer 6 weist einen hohen Wärmeausdehnungskoeffizienten auf, so dass er sich bei Erwärmung stark ausdehnt. Insbesondere kann der Dehnstoff nach einem Phasenübergang fest-flüssig aufgrund des Aufheizvorganges ein stark zunehmendes Volumen aufweisen.

Die Dehnstoffkammer 6 ist bis auf die Öffnung, durch die der Dosierkolben 4 in die Dehnstoffkammer 6 ragt, von einem Gehäuse 7 umschlossen. Das Gehäuse 7 ist vorzugsweise zumindest abschnittsweise aus einem wärmeleitenden Werkstoff, wie einem Metall oder einer Metalllegierung, gefertigt. Ferner ist das Gehäuse 7 gegenüber dem Dosierkolben 4 abgedichtet, so dass der Dehnstoff selbst dann nicht aus der Dehnstoffkammer 6 entweichen kann, wenn er in die flüssige Phase übergegangen ist.

An wenigstens einer Seite des Gehäuses 7 ist ein elektrisches Heizelement 8 angeordnet, das mit dem Gehäuse 7 wärmeübertragend verbunden ist, so dass die vom Heizelement 8 erzeugte Wärme auf den Dehnstoff in der Dehnstoffkammer 6 einwirkt. Das Heizelement kann beispielsweise eine Heizwendel mit einem Heizdraht umfassen. Um die Verluste bei der Wärmeübertragung vom Heizelement 8 zum Dehnstoff in der Dehnstoffkammer 6 möglichst gering zu halten, liegt das Heizelement 8 möglichst vollflächig an dem Gehäuse 7 an. Der geringe Wärmeleitungskoeffizient des Gehäuses 2 verhindert, dass die Wärme des Heizelements 8 in die Umgebung abgegeben wird und dort zu Beschädigungen führen kann. Das Gehäuse 2 dient damit als Wärmeisolator. Alternativ kann die Betätigungseinrichtung 5 auch von einer wärmeisolierenden, im Gehäuse 2 aufgenommenen und das Gehäuse 7 und das Heizelement 8 umgebenden Einhausung (nicht gezeigt) aufgenommen sein.

Das Heizelement 8 wird über eine elektrische Leitung 9 mit elektrischer Energie versorgt. Wenn über die elektrische Leitung 9 elektrische Energie in Form eines Heizstroms zugeführt wird, erwärmt sich automatisch das Heizelement 8 und damit der Dehnstoff in der Dehnstoffkammer 6.

Die Dosierpumpe 1 ist ferner mit einer Rückstelleinrichtung 10 versehen, die eine der Betätigungskraft K entgegengesetzte Rückstellkraft R erzeugt. Die Rückstelleinrichtung 10 kann in Form eines sich zwischen dem Gehäuse 2 und dem Dosierkolben 4 abstützenden Federelements ausgestaltet sein.

In den Zylinder 3 mündet eine Speiseleitung 11, wobei die Mündung 12 der Speiseleitung 11 in einem Bereich angeordnet ist, der vom Dosierkolben 4 während seines von der Betätigungseinrichtung 5 erzeugten Hubes H überstrichen wird.

Der Zylinder 3 ist an seinem dem Dosierkolben 4 entgegengesetzten Ende mit einer Auslassöffnung 13 der Dosierpumpe verbunden. Die Auslassöffnung 13 kann von einem Rückschlagventil 14 verschlossen sein, wobei das Rückschlagventil 14 in Durchflussrichtung vom Zylinder 3 in Richtung des Auslasses 13 sich öffnend ausgestaltet ist. In Strömungsrichtung hinter dem Rückschlagventil 14 kann sich eine Leitung 15 anschlieβen, die zu einer Verbrauchsstelle 16, insbesondere einer Schmierstelle, führt. Die Leitung 15 kann über Schnellverbinder an der Dosierpumpe 1 befestigt werden. Die Rückschlagventile 14 können natürlich auch im Gehäuse 2 integriert sein.

Die Dosierpumpe 1 ist ferner mit einer Befestigungsvorrichtung 17 versehen, an dem ein Schmierstoffbehälter 18 lösbar oder unlösbar befestigt ist. Wie in Fig. 1 dargestellt ist, kann die Befestigungseinrichtung 17 Rasten aufweisen, die den Schmierstoffbehälter an der Dosierpumpe halten. Damit sich die Qualität des Schmierstoffes im Schmierstoffbehälter 18 auch nach einer die vom Hersteller angegebene Haltbarkeitsdauer des Schmierstoffes übersteigende Benutzungsdauer nicht verschlechtert, sind Dichtmittel 19 an der Befestigungsvorrichtung 17 oder dem Schmierstoffbehälter 18 vorgesehen, welche den Schmierstoffbehälter 18 luftdicht an der Dosierpumpe 1 halten. Um einen einfachen Wechsel des Schmierstoffbehälters 18 zu ermöglichen, ist der Schmierstoffbehälter vorzugsweise von außen zugänglich an dem zu schmierenden Maschinenelement angeordnet.

Der Schmierstoffbehälter 18 ist aus vorzugsweise transparentem Material oder mit Sichtschlitzen zur optischen Kontrolle des Füllstandes ausgestaltet.

Wie in Fig. 1 zu erkennen ist, fluchtet die dosierpumpenseitige Speiseleitung 11 mit einer Abgabeöffnung 20 auf Seiten des Schmierstoffbehälters, die in einer Wandung 21, beispielsweise dem Boden oder der Decke des Schmierstoffbehälters 18, ausgebildet ist und mit einem Vorratsvolumen 22 verbunden ist.

In dem Schmierstoffbehälter 18 ist ein Fördermittel 23 integriert, durch das der im Vorratsvolumen 22 enthaltene Schmierstoff unter Druck gesetzt ist. Das Fördermittel 23 kann beispielsweise einen Kolben 24 und ein den Kolben 24 in Richtung des Vorratsvolumens 22 drückendes Federelement 25 umfassen. Der Hub des Federelementes ist so bemessen, dass der Kolben 24 das Vorratsvolumen 22 vollständig entleeren kann. Um eine Oxidation des Schmierstoffes im Schmierstoffvolumen 22 zu vermeiden, dichtet der Kolben 24 das Schmierstoffvolumen luftdicht ab.

Im Bereich der Öffnung 20 kann der Schmierstoffbehälter 18 ein Verschlussmittel 26 aufweisen, das automatisch geöffnet wird, wenn der Schmierstoffbehälter 18 an der Dosierpumpe 1 angebracht wird. Dabei ist die Abgabeöffnung 20 wenigstens vor der ersten Benutzung, d.h. dem ersten Anbringen des Schmierstoffbehälters 18 an der Dosierpumpe 1, durch das Verschlusselement 26 luftdicht verschlossen. Das Verschlusselement 26 kann in Form einer einreißbaren Folie, einer Gusshaut, einer federgespannten Kugel oder einer Klappe ausgestaltet sein.

Um das Verschlusselement 26 beim Anbringen des Schmierstoffbehälters 18 an der Dosierpumpe 1 selbsttätig zu öffnen, kann die Dosierpumpe 1 mit einer Öffnungseinrichtung 27, beispielsweise einem Dorn oder Stift, versehen sein.

Im Folgenden wird die Funktion der Ausführungsform der Fig. 1 kurz erläutert.

Die Dosierpumpe 1 mitsamt dem Schmierstoffbehälter 18 dient zur Langzeitschmierung wenigstens einer Schmierstelle 16 über mehrere Jahre, vorzugsweise über wenigstens fünf Jahre. Hierzu wird die Dosierpumpe 1 in vorbestimmten Zeitabständen betätigt, wobei bei jeder Betätigung der Verbrauchsstelle bzw. Schmierstelle 16 ein vorbestimmtes Schmierstoffvolumen durch die Leitung 15 zugeführt wird. Die Menge des Schmierstoffvolumens bestimmt sich aus dem Hub des Kolbens H im Zylinder 3 und einer Querschnittsfläche A des Dosierkolbens 4 gemäß der Formel A x H. Der Hub H ist dabei derjenige Teil des Gesamthubes H' des Dosierkolbens 4, der nach dem Verschließen des Zylinders 3 gegenüber der Speiseleitung 11 vom Dosierkolben 4 im Zylinder 3 zurückgelegt wird. Nach dem Verschluss der Speiseleitung 11 kann nämlich kein Schmierstoff mehr in die Speiseleitung zurückströmen, so dass der Schmierstoff zwangsweise zum Auslass 13 gefördert wird. Der Zylinder 3 dient als Dosierkammer, deren Volumen die vorbestimmte, an die Verbrauchs- oder Schmierstelle 16 abgegebene Schmierstoffmenge bestimmt.

Zur Betätigung des Dosierkolbens 4 wird die Leitung 9 mit einem sich über die Zeit t ändernden elektrischen Betätigungssignal 30 beaufschlagt. In dem in Fig. 1 dargestellten Betätigungssignal 30 ist die elektrische Energie P, das Produkt aus Spannung und Strom über die Zeit t aufgetragen. Wie zu erkennen ist, wird über die Leitung 9 während einer Zeitspanne T_{S} zunächst eine elektrische Energie P₀ bereitgestellt. Danach wird während einer Zeitspanne T_{P} keine Energie, anschließend wieder über die Zeitspanne T_{S} die Energie P₀. Die Zeitspanne T_{P} bestimmt das Schmierintervall, in dem die Schmierstellen 16 mit Schmierstoff versorgt werden.

Das Betätigungssignal 30 kann über eine SPS-Steuerung erzeugt werden und entspricht dem Signal, wie es bislang für die Betätigung von Hubmagneten in Dosierpumpen verwendet wird. Die Steuerung kann auch in das Gehäuse integriert sein.

Während der Zeitspanne T_{S} wird der Betätigungseinrichtung 8 elektrische Energie P₀ zugeführt, die das Heizelement 8 aufheizt und den Dosierkolben 4 bewegt. Nach Ablauf der Zeit T_{S}, wenn der Dosierkolben 4 seine Endstellung erreicht hat, wird die Energie P₀ abgeschaltet und erst nach Ablauf der Pausenzeit T_{P} wieder zugeschaltet. Da bei Langzeitschmierungen eine Schmierung lediglich in Wochenabständen stattfinden muss, beträgt der Zeitabstand T_{P} ungefähr eine Woche oder ein Mehrfaches hiervon. In Richtung kurzer Zeiten ist die Pausenzeit T_{P} durch die Rückstellzeit des Dehnstoffelementes 5 begrenzt.

Die Länge der Zeitdauer T_{S} bemisst sich nach der Antwortzeit der Betätigungseinrichtung 8, die diese benötigt, um den Dosierkolben 4 um den Hub H in sein in Fig. 1 gestrichelt dargestellte Endstellung zu bewegen. Bei dem in der Fig. 1 dargestellten System beträgt die Zeitdauer T_{S} mehrere Minuten, beispielsweise ca. 2 Minuten. Diese Zeit kann durch Erhöhung der Heizleistung des Heizelements 8 auch verkürzt werden. Während der Zeitdauer T_{S} wird die auf der Leitung 9 zur Verfügung gestellte Energie P₀ vom Heizelement 8 in Wärmeenergie umgewandelt, die an den Dehnstoff in der Dehnstoffkammer 6 übertragen wird. Der Dehnstoff erwärmt sich und dehnt sich dabei aus. Wird als Dehnstoff beispielsweise Wachs verwendet, so schmilzt das Wachs unter Vergrößerung seines Volumens. Der Dosierkolben 4 wird so aus der Dehnstoffkammer 6 in den Zylinder 3 gedrückt und fördert dabei den im Zylinder 3 enthaltenen Schmierstoff durch den Auslass 13 und das Rückschlagventil 14 zur Verbrauchsstelle 16.

Nach Ablauf der Zeitspanne T_{S} und Abschalten der Energiezufuhr P₀ kühlen der Dehnstoff in der Dehnstoffkammer 6 und das Heizelement aus. Der Dosierkolben 4 fährt unter Wirkung der Rückstelleinrichtung 10 in seine Ausgangslage zurück. Durch das Rückschlagventil 14 wird vermieden, dass der Schmierstoff von der Verbrauchsstelle 16 zurück in den Zylinder 3 strömen kann. Durch die Speiseleitung 11 fließt neuer Schmierstoff aus dem Vorratsvolumen 22 heran.

Aufgrund der luftdichten Verbindung zwischen dem Vorratsvolumen 22 und der Dosierpumpe 1 kann der Schmierstoff im Vorratsvolumen 22, in der Speiseleitung 11 und dem Zylinder 3, aus dem gesamten Volumen bis zum Rückschlagventil 14 nicht altern, so dass die Dosierpumpe ohne Wechsel des Schmierstoffbehälters 18 über Zeiträume eingesetzt werden kann, die die normale Haltbarkeit des Schmierstoffes überschreiten. Wie im Folgenden noch genauer beschrieben, wird dieser Vorteil ebenfalls erreicht, wenn das Vorratsvolumen 22 in der Dosierpumpe 1 integriert ist.

Aufgrund der Anordnung der Dosierpumpe 1 in der Nähe der Verbrauchsstelle 16 sind die Leitungen 15 zudem entsprechend kurz, so dass auch in den Leitungen 15 keine Alterung des Schmierstoffes auftreten kann. Das Vorratsvolumen 22 ist so bemessen, dass bei dem von der Dosierpumpe 1 in einer Zeitspanne T_{S} geförderten Schmierstoffvolumen und der zwischen den Schmierintervallen liegenden Pausenspanne T_{P} ein ununterbrochener Schmierbetrieb insbesondere bei der Integration der Dosierpumpe 1 in eine Linearführung eine längere wartungsfreie Nutzung als bei Verwendung von Vorsatzelementen erreicht werden.

Wie in Fig. 1 dargestellt ist, können in einer Dosierpumpe 1 mehrere Dosierkolben 4 gleichzeitig betrieben werden, wobei die Zylinder 3 der einzelnen Dosierkolben 4 über eine oder mehrere Speiseleitungen 11 mit dem Vorratsvolumen 22 verbunden sind. Jeder einzelne Dosierkolben 4 ist einem Auslass 13 und einer Schmierstelle 16 zugeordnet, die er über eine ihm zugeordnete Leitung 15 mit dazwischenliegendem Rückschlagventil 14 versorgt.

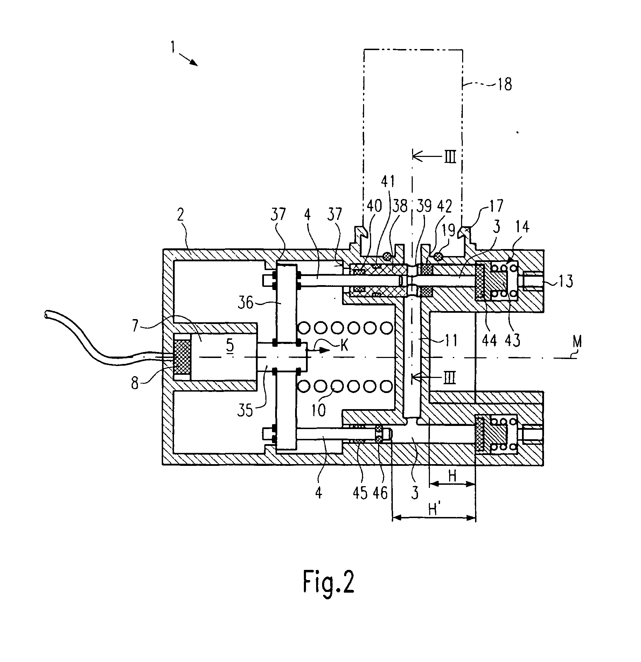

Fig. 2 zeigt eine weitere Ausführungsform einer erfindungsgemäßen Dosierpumpe 1. Dabei werden für Elemente, deren Funktion und/oder Aufbau gleich oder ähnlich zu Elementen der Ausführungsform der Fig. 1 ist, dieselben Bezugszeichen wie in Fig. 1 verwendet.

Im Folgenden wird der Aufbau der Ausführungsform der Fig. 2 beschrieben, wobei lediglich auf die Unterschiede zur Ausführungsform der Fig. 1 eingegangen ist.

In Fig. 2 sind oberhalb und unterhalb der Mittenlinie M der Dosierpumpen 1 zwei unterschiedliche Ausführungen des Zylinders 3 und des Dosierkolbens 4 dargestellt.

Zunächst werden die den beiden Varianten gemeinsamen Merkmale beschrieben.

Im Unterschied zur Ausführungsform der Fig. 1 weist das Heizelement 8 der Dosierkammer 2 keine Heizwendel sondern ein PTC-Heizelement auf, das in wärmeübertragenden Kontakt mit dem Gehäuse 7 der in Fig. 2 nicht dargestellten Dehnstoffkammer 6 steht.

Ferner ist im Unterschied zur Ausführungsform der Fig. 1 der Dosierkolben 4 nicht direkt von der Betätigungseinrichtung 5 angetrieben. Vielmehr weist die Betätigungseinrichtung 5 einen Arbeitskolben 35 auf, der in die Dehnstoffkammer 6 ragt und auf den die durch die Ausdehnung des Dehnstoffes in der Dehnstoffkammer 6 erzeugte Betätigungskraft K einwirkt. Am Arbeitskolben 35 ist ein Bewegungsübertragungselement 36 befestigt, an dem der Dosierkolben 4 gehalten ist. Das Bewegungsübertragungselement 36 kann, wie in Fig. 2 dargestellt ist, scheibenförmig ausgestaltet sein. Durch das Bewegungsübertragungselement 36 können mehrere Dosierkolben 4 oder auch ein einziger Dosierkolben 4 bewegungsstarr mit der Betätigungseinrichtung 5 verbunden werden. Bei einer Bewegung des Arbeitskolbens 35 werden somit über das Bewegungsübertragungselement 36 mehrere Dosierkolben 4 gleichzeitig bewegt. Zur besseren Wärmeisolierung und/oder zur elektrischen Isolierung kann das Betätigungselement 36 auch aus einem Werkstoff mit geringer Wärmeleitfähigkeit und/oder elektrische Leitfähigkeit, wie einem Kunststoff, gefertigt sein.

Im Gegensatz zur Ausführungsform der Fig. 1 ist die Rückstelleinrichtung 10 bei den beiden Varianten der Fig. 2 ferner nicht am Dosierkolben 4 angeordnet, sondern an der Betätigungseinrichtung 5, so dass bei Verwendung mehrerer Dosierkolben 4 lediglich eine einzige Rückstelleinrichtung 10 vorgesehen ist. Die Rückstelleinrichtung 10 wirkt direkt auf die Betätigungseinrichtung 5 und stützt sich zwischen dem Gehäuse 2 der Dosierpumpe 1 und dem Bewegungsübertragungselement 36 oder, in einer Variante, am Arbeitskolben 35 ab.

Die oberhalb der Mittellinie M der Fig. 2 dargestellte Variante weist die folgenden von der Ausführungsform der Fig. 1 abweichenden Merkmale auf.

Bei dieser Variante sind Anschläge 37 vorgesehen, um den Hub des Dosierkolbens 4 zu begrenzen und dadurch die Endlagen des Dosierkolbens 4 bestimmen. Die Anschläge 37 sind innerhalb des maximal möglichen Hubes der Betätigungseinrichtung 5 und der Rückstelleinrichtung 10 angeordnet, so dass die durch die Anschläge 37 festgelegten Endpositionen vom Dosierkolben 4 sicher erreicht werden. Wie in der oberen Variante der Fig. 2 gezeigt ist, kann der Anschlag mit dem Bewegungsübertragungselement 36 zusammenwirken oder, in einer alternativen Ausgestaltung, auch mit den jeweiligen Dosierkolben 4.

Das Gehäuse 2 ist mit einer Ausnehmung oder Bohrung versehen, in die eine Buchse 38 eingesetzt ist. Die Buchse 38 ist vorzugsweise aus einem festen und gleitfähigem Kunststoff oder auch aus Metall gefertigt, wie z. B. Stahl oder Messing, wenn der Dosierkolben 4 in die Buchse 38 mit geringem Spiel von wenigen µm eingepasst ist. Im letzteren Fall kann auf eine zusätzliche Dichtung zwischen Buchse 38 und Dosierkolben 4 verzichtet werden. In einer in axialer Richtung durchgehenden, den Zylinder 3 bildende Bohrung der Buchse 38 ist der Dosierkolben 4 aufgenommen. Eine radiale Bohrung 39, die durch die axiale Bohrung verläuft, ist mit der Speiseleitung 11 verbunden.

Die Buchse 38 ist mit Dichtmitteln 40, durch die der Spalt zwischen dem Dosierkolben 4 und der Axialbohrung abgedichtet ist, und mit Dichtmitteln 41, durch die die Buchse 38 gegenüber dem Gehäuse 2 abgedichtet ist, versehen. Das Dichtmittel 40 dichtet den Dosierkolben 4 in Richtung der Betätigungseinrichtung 5 ab und verhindert so, dass Schmierstoff aufgrund der langsamen Reaktionszeit des Dehnstoffantriebes und der daraus resultierenden geringen Vorschubgeschwindigkeit des Dosierkolbens 4 Schmierstoff durch den Spalt zwischen dem Dosierkolben 4 und dem Zylinder 3 fließen und die vorbestimmte Dosiermenge verändern kann.

Die Dichtmittel 40, 41 sind vorzugsweise radialelastisch, um Wärmeausdehnungen des Dosierkolbens 4 bei der Betätigung der Heizeinrichtung 8 und fertigungstechnisch nicht zu vermeidende Spalte zu kompensieren. Ein weiteres Dichtmittel 42 ist an dem in Richtung des Auslasses 13 weisenden Ende der Buchse 38 in einem Bereich angeordnet, der vom Dosierkolben 4 während seines Hubes H überstrichen wird. Um eine Beschädigung des Dichtmittels 42 aufgrund des Überfahrens durch den Dosierkolben 4 zu vermeiden, weist der Dosierkolben 4 an seinem in den Zylinder 3 ragenden Ende eine Einlaufkontur in Form eines Radius oder einer Fase auf.

Das Rückschlagventil 14 der oberen Variante der Fig. 2 ist nahe der Endposition des Dosierkolbens 4 bei Betätigung der Betätigungseinrichtung 5 angeordnet und in einer Bauweise ausgeführt. Ein Ventilteller 43 ist an seiner dem Zylinder 3 zugewandten Dichtfläche mit einem Dichtbereich aus einem Elastomer 44 versehen.

In ihrer Funktion entspricht die obere Variante der Fig. 2 der Funktion des Ausführungsbeispiels 1.

Nun wird die unterhalb der Mittellinie M dargestellte Variante der Fig. 2 beschrieben. Der Kürze halber wird lediglich auf die Unterschiede zur oberen Variante der Fig. 2 und zur Ausführungsform der Fig. 1 eingegangen.

Bei der unteren Variante der Fig. 2 ist der Zylinder 3 direkt im Gehäuse 2 im Zuge der Herstellung des Gehäuses 2 im Spritzgussverfahren mit ausgeformt worden. Ein Dichtmittel 45 dichtet den Dosierkolben 4 gegenüber dem Gehäuse 2 in Richtung der Betätigungseinrichtung 5 ab. Die Funktion des Dichtmittels 45 entspricht der des Dichtmittels 30 der oberen Variante der Fig. 2.

Bei der unteren Variante der Fig. 2 ist der Dosierkolben 4 ferner mit einem mit dem Dosierkolben 4 mitbewegten Dichtmittel 46 versehen. Das Dichtmittel 46 des Dosierkolbens 4 läuft bei Betätigung der Betätigungseinrichtung 5 über die Mündung der Speiseleitung 11 in den Zylinder 3. Um eine Abnutzung des Dichtmittels 2 zu verhindern, ist der Bereich der Mündung der Speiseleitung 11 mit einer Einlaufkontur, wie einer Fase oder einem Radius, versehen.

Der übrige Aufbau und die Funktion der unteren Variante der Fig. 2 entspricht dem übrigen Aufbau und der Funktion der oberen Variante.

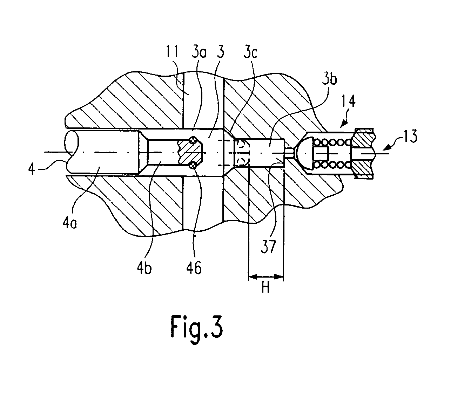

Fig. 3 zeigt eine weitere Variante einer Dosierpumpe 1, wobei lediglich der Aufbau des Dosierkolbens 4 und des Zylinders 3 dargestellt ist.

Um die aufwendige Fertigung einer Einlaufkontur in der Mündung der Speiseleitung 11 im Zylinder 3 zu vermeiden, ist der Dosierkolben 4 in axialer Richtung in einen Abschnitt 4a und einen Abschnitt 4b unterteilt, wobei der Durchmesser des Abschnittes 4a größer als der Durchmesser des Abschnittes 4b ist.

Der Abschnitt 4b ist zwischen dem Abschnitt 4a und dem Auslass 13 angeordnet. Der Zylinder 3 ist mit Abschnitt 3a mit größerem Durchmesser und einen Abschnitt 3b mit kleinerem Durchmesser in axialer Richtung aufgeteilt, wobei die Speiseleitung im Bereich 3a mündet.

Der Durchmesser des Abschnittes 4b des Dosierkolbens ist so bemessen, dass der Abschnitt 4b im Abschnitt 3b des Zylinders aufgenommen werden kann. An dem in Richtung des Auslasses 13 gelegenen Ende des Abschnittes 4b ist eine Dichtung 46 angeordnet, die beim Eintauchen des Abschnittes 4b in den Zylinderabschnitt 3b diesen Abschnitt 3b gegenüber dem Abschnitt 3a abdichtet und die Verbindung zwischen dem Auslass 13 und der Speiseleitung 11 verschließt.

In der in Fig. 3 dargestellten Ausgangsstellung des Dosierkolbens ist der Abschnitt 4b des Dosierkolbens aus dem Zylinderabschnitt 3b bewegt und in radialer Richtung von der Innenwand des Zylinderabschnittes 3a beabstandet, so dass die Dichtung die Zylinderinnenwand des Abschnittes 3a nicht berührt. Im Übergang zwischen dem Zylinderabschnitt 3a und dem Zylinderabschnitt 3b befindet sich eine Einlaufkontur 3c in Form einer Auflaufschräge, so dass das Dichtmittel 46 schonend in den Zylinderabschnitt 3b eingeführt wird. In Fig. 3 nicht dargestellt ist, dass an dem vom Auslass 13 abgewandten Ende des Dosierkolbens 4 eine weitere Dichtung 40 (vgl. Fig. 2) vorgesehen sein kann.

Durch diese Ausgestaltung wird vermieden, dass im Betrieb die Dichtung 46 über den Einlauf der Speiseleitung 11 läuft.

Die zum Auslass 13 gelegene Stirnfläche des inneren Zylinderabschnittes 3b bildet den Anschlag 37 für den Dosierkolben 4, so dass eine exakte Bestimmung der Dosiermenge möglich ist. Alternativ kann der Anschlag 37 auch im Bereich der Einlaufkontur 3c angeordnet sein.

Der für die Dosiermenge relevante Hub H berechnet sich bei der Variante der Fig. 3 aus dem Hub vom Eintauchen der Dichtung 46 in den Zylinderabschnitt 3b bis zur Endlage, beim Anfahren gegen den Anschlag 37.

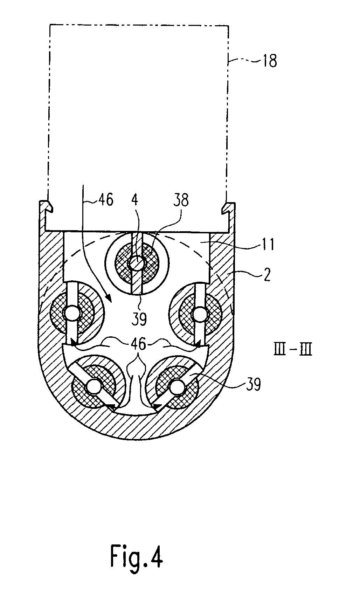

Fig. 4 zeigt einen Schnitt entlang der Linie III-III durch die obere Variante der Fig. 2.

Wie zu erkennen ist, ist die Speiseleitung 11 in Form eines Schachtes ausgestaltet, der sich zum Vorratsvolumen 22 hin öffnet und an den übrigen Seiten vom Gehäuse 2 umschlossen ist. Die Bohrungen 39 in den Buchsen 38 öffnen sich in den Schacht, so dass eine zentrale Versorgung der als Dosierkammer dienenden Zylinder 3 über die Speiseleitung 11 und die Bohrungen 39 in den Buchsen 38 möglich ist, wie durch die Pfeile 46 angedeutet ist.

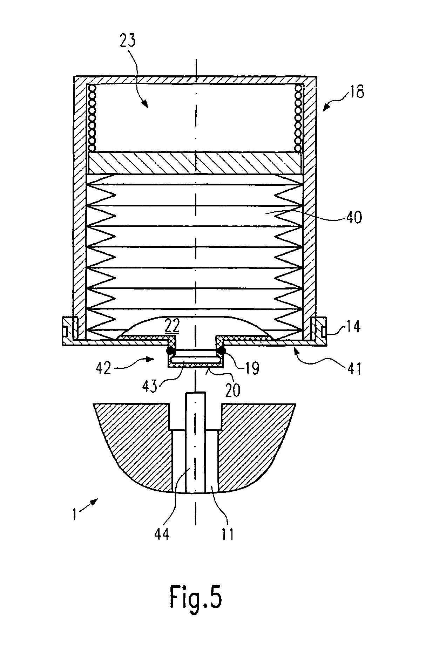

Fig. 5 zeigt eine weitere Ausführungsform eines Schmierstoffbehälters 18, wobei für Elemente, die hinsichtlich ihrer Funktion oder ihres Aufbaus aus den vorangegangenen Ausführungsbeispielen bekannt sind, dieselben Bezugszeichen verwendet werden. In Fig. 4 ist die Dosierpumpe 1 der Einfachheit halber nur im Bereich des Einlasses der Speiseleitung 11 wiedergegeben.

Der Schmierstoffbehälter 18 der Fig. 5 weist eine austauschbare Kartusche 40 auf, die in dem Schmierstoffbehälter 18 eingesetzt ist und in der das Vorratsvolumen 22 ausgebildet ist. Die Kartusche 40 ist aus einem ziehharmonikaförmigen Balgkörper gefertigt, der in Richtung der Abgabeöffnung 22 zusammendrückbar ausgestaltet ist. Wie in Fig. 5 zu erkennen ist, ist die Kartusche 40 zwischen dem Fördermittel 23 und einem entfernbaren, beispielsweise aufgeschraubten oder aufgeclipsten, Bodenplatte 41 des Schmierstoffbehälters 18 angeordnet, so dass der vom Fördermittel 18 erzeugte Druck die Kartusche 40 an die Bodenplatte drückt und das Volumen der Kartusche 40 zu verkleinern versucht.

An der Bodenplatte 41 ist das Befestigungsmittel 17 in Form eines Bajonettverschlusses angebracht.

Die Abgabeöffnung 20 wird bei der Ausführungsform der Fig. 5 von der Kartusche 40 gebildet. Sie sitzt am Ende eines sich von der Kartusche 40 bzw. dem Schmierstoffbehälter 18 in Richtung der Dosierpumpe 1 erstreckenden, rohrförmigen Ansatz 42, an dem auch die Dichtmittel 19 angeordnet sind.

Die Abgabeöffnung 20 ist im Lieferzustand vor der ersten Benutzung, also vor dem ersten Anbringen an der Dosierpumpe 1, mit einem stopfenförmigen Verschlusskörper 43 luftdicht verschlossen.

Im Einlass der Speiseleitung 11 befindet sich ein Druckstift 44, der parallel zur Speiseleitung 11 verläuft und bei an der Dosierpumpe 1 befestigtem Schmierstoffbehälter 18 durch die Abgabeöffnung 20 hinter die Stelle erstreckt, an der im Lieferzustand der Verschlusskörper 43 angeordnet ist. Dadurch wird bei der Befestigung des Schmierstoffbehälters 18 an der Dosierpumpe der Verschlusskörper 43 automatisch weggedrückt und die Abgabeöffnung 20 geöffnet.

Die Länge des Rohransatzes 42 und des Druckstiftes sind dabei so bemessen, dass sich der Druckstift 44 bei montierter Kartusche 40 durch den Rohransatz 42 etwas in das Vorratsvolumen 22 erstreckt, um zu verhindern, dass sich der Verschlusskörper über die Abgabeöffnung legen kann.

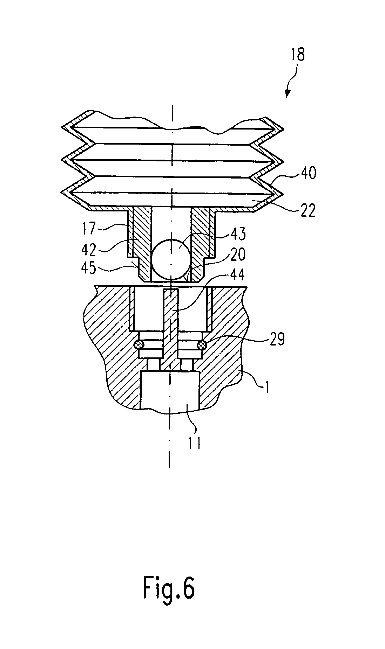

Fig. 6 zeigt eine Variante der Kartusche 40 der Fig. 4, bei der die Befestigungsvorrichtung 17 beispielsweise in Form eines Gewindes am Ansatz 42 und das Dichtmittel 90 an der Dosierpumpe 1 im Bereich des Einlasses der Speiseleitung 11 angeordnet ist. Die Dichtmittel 19 liegen an einer am Ansatz 42 ausgebildeten Dichtfläche 45 an und dichten das Vorratsvolumen 22 luftdicht ab.

Der Verschlusskörper 43 ist bei der Variante der Fig. 6 als in die Abgabeöffnung 20 eingedrückte Kugel ausgebildet. Durch einen Dorn 44, der sich entlang der Mittenachse der Speiseleitung 11 zu deren Einlass erstreckt, wird die Kugel beim Anbringen der Kartusche 40 selbsttätig in das Vorratsvolumen 22 hineingedrückt.

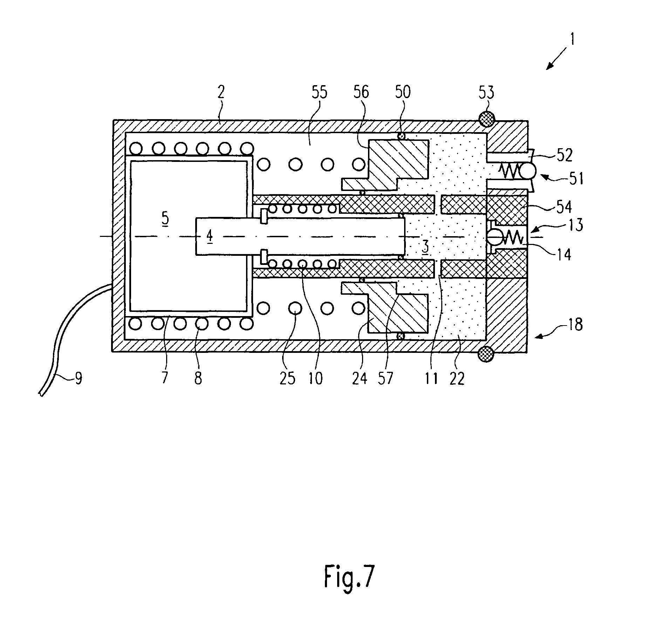

Fig. 7 zeigt eine weitere Ausführungsform einer erfindungsgemäßen Dosierpumpe 1. Dabei werden für Elemente, deren Funktion und/oder Aufbau gleich oder ähnlich zu Elemente der Ausführungsformen der vorherigen Figuren ist, dieselben Bezugszeichen verwendet.

Im Folgenden wird der Aufbau der Ausführungsform der Fig. 7 beschrieben, wobei lediglich die Unterschieden zu den vorherigen Ausführungsformen eingegangen ist.

In Fig. 7 ist im Gehäuse 2 der Dosierpumpe 1 der Schmierstoffbehälter 18 integriert. Der Schmierstoffbehälter 18, bestehend aus dem Vorratsvolumen 22, dem Kolben 24 und dem Federelement 25, umgibt, wenigstens abschnittsweise, den Dosierkolben 4 und den Zylinder 3. Eine Umfangsfläche eines Zylindergehäuses 54, das Gehäuse 2 der Dosierpumpe 1 und der Schmierstoffbehälter 18 sind im Wesentlichen zylindrisch ausgebildet und konzentrisch zueinander angeordnet.

Bei der in Fig. 7 dargestellten Ausführungsform ist der Zylinder 3 nicht in dem Gehäuse 2, sondern in dem Zylindergehäuse 54 ausgebildet. Das Zylindergehäuse 54 ist an dem der Auslassöffnung 13 zugewandten Ende mit dem Gehäuse 2 verbunden, z.B. durch eine Schraubverbindung. Am anderen Ende ist das Zylindergehäuse 54 in Fig. 7 mit dem Betätigungselement 5 verbunden. In dem Zylindergehäuse 54 ist die Speiseleitung 11 ausgebildet.

Das Vorratsvolumen 22 umgibt das Zylindergehäuse 54 und wird durch das Gehäuse 2, das Zylindergehäuse 21 und den als Ringkolben ausgebildeten Kolben 24 begrenzt. Das Vorratsvolumen 22 ist über die Speiseleitung 11 mit dem Zylinder 3 verbunden. Der ringförmige Kolben 24 ist um das Zylindergehäuse 54 in axialer Richtung beweglich angeordnet. Die Umfangsfläche des Zylindergehäuses 54 und die Innenseite des Gehäuses 2 bilden Führungsflächen, an denen der Kolben 24 in axialer Richtung geführt ist und entlang gleiten kann. Diese Führungsflächen werden durch den im Vorratsvolumen 22 befindlichen Schmierstoff (durch Punkte dargestellt), bei jedem Hub automatisch geschmiert, wodurch Verschleiß verhindert wird. Um ein ungewolltes Entweichen des Schmierstoffs aus dem Vorratsvolumen 22 zu verhindern, sind an dem Kolben 24 sowohl am Innen- als auch am Außendurchmesser Dichtelemente 50 angeordnet, die das Vorratsvolumen 22 zum Einbauraum 55 des Federelements 25 abdichten. Die Dichtelemente 50 können beispielsweise O-Ringe bzw. Runddichtringe oder andere handelsübliche Dichtungen sein. Der Kolben 24 trennt das Vorratsvolumen 22 vom Einbauraum 55 des Federelements 25. Im Einbauraum 55 ist das Federelement 25 vorgespannt zwischen dem Kolben 24 und der Betätigungseinrichtung 5 angeordnet, so dass der bewegliche Kolben 24 in Richtung des Vorratsvolumens 22 gedrückt ist. Das Federelement 25 ist bei der in Fig. 7 dargestellten Ausführungsform als eine Druck-Schraubenfeder ausgebildet. Alternativ kann jedes beliebige Vorspannelement eingesetzt werden. Auch kann das Federelement 25 in dem Vorratsvolumen 22 angeordnet und als eine Zugfeder ausgebildet sein.

Der Kolben 24 weist zwei Absätze 56, 57 auf, wobei der eine Absatz 57 an der dem Vorratsvolumen 22 zugewandten Seite und der andere Absatz 56 auf der dem Vorratsvolumen 22 abgewandten Seite ausgebildet ist.

Der Kolben 24 ist durch den Absatz 57 so ausgebildet, dass die Mündung der Speiseleitung 11 in jeder Position des Kolbens 24 mit dem Vorratsvolumen 22 verbunden ist.

Der Absatz 56 bildet einen Sitz für das Federelement 25. Die Länge des Absatzes 56 in axialer Richtung ist so bemessen, dass auch bei einer Position des Kolbens 24 mit maximalem Vorratsvolumen 22 (in Fig. 7 auf der linken Seite) die axiale Länge des Einbauraums 55 größer oder gleich der Länge des voll komprimierten Federelementes 25 ist.

In dem Gehäuse 2 der Dosierpumpe 1 ist ein Schmierstoffeinlass 51 ausgebildet. Der Schmierstoffeinlass 51 mündet in das Vorratsvolumen 22 und ist mit einem Rückschlagventil 52 oder einem Verschluss, wie z. B. einer Kugel- oder Verschlussschraube, verschlossen. Das Rückschlagventil 52 ist beispielsweise als ein Schmiernippel ausgebildet und verschließt das Vorratsvolumen 22 fluiddicht nach außen.

In Umfangsrichtung des Gehäuses 2 ist ein Dichtmittel 53, das in Fig. 7 als ein O-Ring ausgebildet ist, angeordnet.

Im Betrieb der in Fig. 7 dargestellten Ausführungsform der erfindungsgemäßen Dosierpumpe 1 wird der Dosierkolben 4, wie bei den vorherigen Ausführungsformen, durch die aktivierte Betätigungseinrichtung 5 axial in Richtung des Schmiermittelauslasses 13 bewegt. Dabei wird der im Zylinder 3 befindliche Schmierstoff zu einer mit dem Schmiermittelauslass 13 verbundenen Schmierstelle geleitet. Dann wird die Betätigungseinrichtung 5 deaktiviert, wie oben beschrieben. Beim anschließenden Rückzug des Dosierkolbens 4 in seine Ausgangsposition durch die Rückstelleinrichtung 10 strömt Schmierstoff aus dem Vorratsvolumen 22 in den Zylinder 3 für eine nächste Betätigung nach. Dabei wird der Kolben 24 durch das Federelement 25 in Richtung des Vorratsvolumens 22 bewegt bis der Zylinder 3 vollständig befüllt ist.

Durch den Schmierstoffeinlass 51 kann das Vorratsvolumen 22 bei einer Ausgestaltung mit Rückschlagventil oder Schmiernippel bei Bedarf, wenn das Vorratsvolumen 22 leer ist, von außen mit neuem Schmierstoff befüllt werden. Der von außen eingefüllte Schmierstoff muss beim Befüllen druckbeaufschlagt sein, damit die Vorspannkraft des Federelementes 25 überwunden und der Kolben 24 in axialer Richtung entgegen dem Vorratsvolumen 22 bewegt werden kann.

Durch die Ausgestaltung der Dosierpumpe 1 mit integriertem Schmierstoffbehälter 18 wird eine besonders kompakte, patronenartige Moduleinheit geschaffen, die einfach eingebaut werden kann. Eine solche Dosierpumpe 1 kann beispielsweise in eine zu einer Schmierstelle führende Bohrung eingesetzt werden. Durch das Dichtmittel 53 ist die Dosierpumpe 1 in der Bohrung abgedichtet angeordnet und ein ungewolltes Entweichen von Schmierstoff wird verhindert.

## Patentansprüche

1. Dosierpumpe (1), durch die eine vorbestimmte Menge Schmierstoff an eine Schmierstelle dosiert abgebbar ist, mit wenigstens einem durch eine Betätigungseinrichtung (5) antreibbaren Dosierkolben (4), wobei ein im Betrieb mit Schmierstoff gefüllter Bereich eines Zylinders (3) der Dosierpumpe (1), in dem der Dosierkolben (4) sich bewegt, als Dosierkammer dient, in der die zu dosierende Schmierstoffmenge aufzunehmen ist, und wobei ein Hub (H) des Dosierkolbens (4) durch einen Anschlag (37) begrenzt ist, **dadurch gekennzeichnet, dass** die Betätigungseinrichtung (5) wenigstens ein Heizelement (8) und ein durch das Heizelement (8) aufheizbares Dehnstoffelement (6, 7) umfasst und dass der Anschlag im Bereich einer Einlaufkontur (3c) des Zylinders (3) angeordnet ist.

2. Dosierpumpe (1) nach Anspruch 1, **dadurch gekennzeichnet, dass** eine Rückstelleinrichtung (10) vorgesehen ist, durch die eine der Betätigungseinrichtung (5) entgegenwirkende Rückstellkraft (R) erzeugbar ist.

3. Dosierpumpe (1) nach Anspruch 2, **dadurch gekennzeichnet, dass** die Rückstelleinrichtung (10) wenigstens ein Federelement umfasst.

4. Dosierpumpe (1) nach Anspruch 2, **dadurch gekennzeichnet, dass** die Rückstelleinrichtung (10) ein Dehnstoffelement umfasst.

5. Dosierpumpe (1) nach einem der oben genannten Ansprüche, **dadurch gekennzeichnet, dass** das Heizelement (8) wenigstens ein PTC-Element umfasst.

6. Dosierpumpe (1) nach einem der oben genannten Ansprüche, **dadurch gekennzeichnet, dass** der Dosierkolben (4) in einem Zylinder (3) verschieblich und mit einem Spiel aufgenommen ist, das den Zylinder (3) schmiermitteldicht verschließt.

7. Dosierpumpe (1) nach einem der Ansprüche 1 bis 5, **dadurch gekennzeichnet, dass** der Dosierkolben (4) in einem Zylinder (3) verschieblich aufgenommen ist und dass zwischen dem Dosierkolben und der Zylinderinnenwand wenigstens ein in radialer Richtung elastisches Dichtelement (40, 42, 45, 46) angeordnet ist.

8. Dosierpumpe (1) nach Anspruch 7, **dadurch gekennzeichnet, dass** das Dichtelement (40) zwischen einer Mündung eine Speiseleitung (11) in den Zylinder (3) und der Betätigungseinrichtung (5) angeordnet ist.

9. Dosierpumpe (1) nach einem der oben genannten Ansprüche, **dadurch gekennzeichnet, dass** der Dosierkolben (4) in einem spritztechnisch hergestellten Zylinder (3) verschieblich aufgenommen ist.

10. Dosierpumpe (1) nach einem der oben genannten Ansprüche, **dadurch gekennzeichnet, dass** der Zylinder (3) und der Dosierkolben (4) in axialer Richtung in Abschnitte (3a, 3b, 4a, 4b) unterschiedlichen Durchmesser unterteilt sind.

11. Dosierpumpe (1) nach Anspruch 10, **dadurch gekennzeichnet, dass** die Speiseleitung im Abschnitt (3a) des Zylinders (3) mit größerem Durchmesser und ein Dichtmittel am Abschnitt (4b) des Dosierkolbens (4) mit kleinerem Durchmesser angeordnet ist.

12. Dosierpumpe (1) nach einem der Ansprüche 9 bis 11, **dadurch gekennzeichnet, dass** der Zylinder (3) mit einem Gehäuse (2) der Dosierpumpe einteilig ausgeformt ist.

13. Dosierpumpe (1) nach einem der oben genannten Ansprüche, **dadurch gekennzeichnet, dass** eine Mehrzahl von Dosierkolben (4) vorgesehen ist, die von der Betätigungseinrichtung (5) gemeinsam betätigbar angeordnet sind.

14. Dosierpumpe (1) nach Anspruch 13, **dadurch gekennzeichnet, dass** zwischen der Betätigungseinrichtung (5) und der Mehrzahl von Dosierkolben ein die Dosierkolben (4) bewegungsstarr verbindendes Bewegungsübertragungselement (36) angeordnet ist.

15. Dosierpumpe (1) nach einem der oben genannten Ansprüche, **dadurch gekennzeichnet, dass** in der Zylinderinnenwand im Bereich des Hubes (H) des Dosierkolbens (4) eine Speiseleitung (11) mündet, die im Mündungsbereich mit einer Einlaufkontur versehen ist.

16. Dosierpumpe (1) nach einem der oben genannten Ansprüche, **dadurch gekennzeichnet, dass** die Dosierpumpe (1) wenigstens einen Schmierstoffauslass (13) aufweist und dass im Bereich des wenigstens einen Schmierstoffauslasses (13) ein Rückschlagventil (14) angeordnet ist, das bei durch die Betätigungseinrichtung (5) bewegten Dosierkolben (4) in den geöffneten Zustand überführbar ausgestaltet ist.

17. Dosierpumpe (1) nach einem der oben genannten Ansprüche, **dadurch gekennzeichnet, dass** die Dosierpumpe (1) mit einem Schmierstoffbehälter zu einer baulichen Einheit integrierbar ausgestaltet ist.

18. Dosierpumpe (1) nach Anspruch 17, **dadurch gekennzeichnet, dass** der Schmierstoffbehälter (18) auswechselbar an der Dosierpumpe (1) angebracht ist.

19. Dosierpumpe (1) nach einem der Ansprüche 17 bis 18, **dadurch gekennzeichnet, dass** der Schmierstoffbehälter (18) luftdicht an der Dosierpumpe (1) angebracht ist.

20. Dosierpumpe (1) nach einem der Ansprüche 17 bis 19, **dadurch gekennzeichnet, dass** der Schmierstoffbehälter (18) ein Vorratsvolumen (22) aufweist, dessen Größe einen im Wesentlichen unterbrechungsfreien Dosiervorgang über wenigstens fünf Jahre ermöglicht.

21. Dosierpumpe (1) nach einem der Ansprüche 1 bis 16, **dadurch gekennzeichnet, dass** die Dosierpumpe (1) einen Schmierstoffbehälter (18) aufweist, der innerhalb des Gehäuses (2) der Dosierpumpe (1) integriert ist.

22. Dosierpumpe (1) nach Anspruch 21, **dadurch gekennzeichnet, dass** der Schmierstoffbehälter (18) ein Vorratsvolumen (22) aufweist, das mit dem Zylinder (3) verbunden ist.

23. Dosierpumpe (1) nach einem der Ansprüche 21 bis 22, **dadurch gekennzeichnet, dass** der Dosierkolben (4) vom Schmierstoffbehälter (18), wenigstens abschnittsweise, umgeben ist.

24. Dosierpumpe (1) nach einem der Ansprüche 21 bis 23, **dadurch gekennzeichnet, dass** im Schmierstoffbehälter (18) ein im Wesentlichen in Richtung des Vorratsvolumens (22) vorgespannter Kolben (24) beweglich angeordnet ist.

25. Dosierpumpe (1) nach einem der Ansprüche 21 bis 24, **dadurch gekennzeichnet, dass** der Kolben (24) um ein Zylindergehäuse (54) herum beweglich angebracht ist.

26. Dosierpumpe (1) nach einem der Ansprüche 21 bis 25, **dadurch gekennzeichnet, dass** der Kolben (24) als ein Ringkolben ausgebildet.

27. Dosierpumpe (1) nach einem der Ansprüche 21 bis 26, **dadurch gekennzeichnet, dass** die Dosierpumpe 1 einen Schmierstoffeinlass (51) aufweist, durch den Schmierstoff in das Vorratsvolumen (22) von außen einleitbar ist.

28. Dosierpumpe (1) nach einem der oben genannten Ansprüche, **dadurch gekennzeichnet, dass** die Betätigungseinrichtung (5) wärmeisoliert in einem Gehäuse (2) aus einem Material mit geringer Wärmeleitfähigkeit aufgenommen ist.

29. Dosierpumpe (1) nach Anspruch 14, **dadurch gekennzeichnet, dass** das Bewegungsübertragungselement (36) aus einem Material mit geringer Wärmeleitfähigkeit hergestellt ist.

30. Schmierstoffbehälter (18) mit einem mit Schmierstoff wenigstens teilweise gefüllten Vorratsvolumen (22), und mit einer Halteeinrichtung (17), **dadurch gekennzeichnet, dass** das Vorratsvolumen (22) durch die Befestigungsvorrichtung (17) im Wesentlichen luftdicht an einer Dosierpumpe (1) nach einem der Ansprüche 1 bis 16 auswechselbar anbringbar ausgestaltet ist.

31. Schmierstoffbehälter (18) nach Anspruch30, **dadurch gekennzeichnet, dass** die Halteeinrichtung (17) als Bajonett ausgestaltet ist.

32. Schmierstoffbehälter (18) nach Anspruch 30 oder31, **dadurch gekennzeichnet, dass** in den Schmierstoffbehälter (18) ein von einem Federelement (25) in Richtung des Vorratsvolumens (22) vorgespannter Kolben (24) integriert ist.

33. Schmierstoffbehälter (18) nach einem der Ansprüche 30 bis 32, **dadurch gekennzeichnet, dass** in dem Vorratsvolumen (22) eine Schmierstoffmenge aufgenommen ist, die einen Betrieb der Dosierpumpe (1) über wenigstens fünf Jahre ermöglicht.

34. Schmierstoffbehälter (18) nach einem der Ansprüche 30 bis 33, **dadurch gekennzeichnet, dass** eine Abgabeöffnung (20) des Vorratsvolumens (22) durch ein Verschlusselement (26) vor der ersten Benutzung an der Dosierpumpe (1) verschlossen ist und dass das Verschlusselement (26) mit einer Öffnungseinrichtung (27) der Dosierpumpe (1) zusammenwirkt und bei auf die Dosierpumpe (1) gesetzten Schmierstoffbehälter (18) die Abgabeöffnung (20) freigibt.

## Claims

1. Metering pump (1), through which a predetermined amount of lubricant can be output in a metered manner to a lubrication point, comprising at least one metering piston (4) that can be driven by an operating means (5), wherein a portion of a cylinder (3) which is filled with lubricant during operation and in which the metering piston (4) moves serves as a metering chamber in which the lubricant quantity to be metered is to be accommodated, and wherein a stroke (H) of the metering piston (4) is restricted by an abutment (37), **characterized in that** the operating means (5) comprises at least one heating element (8) and one expansion element (6, 7) that can be heated by the heating element (8), and **in that** the abutment is arranged in the area of the inlet contour (3c) of the cylinder (3).

2. Metering pump (1) as claimed in claim 1, **characterized in that** a resetting means (10) is provided through which a resetting force (R) counteracting the operating means (5) can be generated.

3. Metering pump (1) as claimed in claim 2, **characterized in that** the resetting means (10) comprises at least one spring element.

4. Metering pump (1) as claimed in claim 2, **characterized in that** the resetting means (10) comprises an expansion element.

5. Metering pump (1) as claimed in one of the above-mentioned claims, **characterized in that** the heating element (8) comprises at least one PTC element.

6. Metering pump (1) as claimed in one of the above-mentioned claims, **characterized in that** the metering piston (4) is accommodated within a cylinder (3) displaceably and with a tolerance which seals the cylinder (3) in a lubricant-tight manner.

7. Metering pump (1) as claimed in one of claims 1 to 5, **characterized in that** the metering piston (4) is displaceably accommodated within a cylinder (3) and that at least one sealing element (40, 42, 45, 46) elastic in the radial direction is arranged between the metering piston and the inner wall of the cylinder.

8. Metering pump (1) as claimed in claim 7, **characterized in that** the sealing element (40) is arranged between an opening of a supply line (11) into the cylinder (3) and an operating means (5).

9. Metering pump (1) as claimed in one of the above-mentioned claims, **characterized in that** the metering piston (4) is displaceably accommodated in a cylinder (3) produced by injection molding.

10. Metering pump (1) as claimed in one of the above-mentioned claims, **characterized in that** the cylinder (3) and the metering piston (4) are divided in the axial direction in sections (3a, 3b, 4a, 4b) of different diameters.

11. Metering pump (1) as claimed in claim 10, **characterized in that** the supply line is arranged in section (3a) of the cylinder (3) with a larger diameter and a sealing means is arranged at the section (4b) of the metering piston (4) with a smaller diameter.

12. Metering pump (1) as claimed in one of claims 9 to 11, **characterized in that** the cylinder (3) is formed integrally with a housing (2) of the metering pump.

13. Metering pump (1) as claimed in one of the above-mentioned claims, **characterized in that** a plurality of metering pistons (4) is provided, which are arranged in a manner commonly operable by the operating means (5).

14. Metering pump (1) as claimed in claim 13, **characterized in that** a movement transfer element (36) connecting the metering pistons (4) in a motion-transmitting manner is arranged between the operating means (5) and the plurality of metering pistons.

15. Metering pump (1) as claimed in one of the above-mentioned claims, **characterized in that** a supply line (11) opens in the inner wall of the cylinder in the area of the stroke (H) of the metering piston, said supply line being provided with an intake contour in the opening portion.

16. Metering pump (1) as claimed in one of the above-mentioned claims, **characterized in that** the metering pump (1) comprises at least one lubricant outlet (13) and that a return valve (14) is arranged in the area of the at least one lubricant outlet (13), said return valve being designed in a manner that it can be transferred to the opened state when the metering piston (4) is moved by the operating means (5).

17. Metering pump (1) as claimed in one of the above-mentioned claims, **characterized in that** the metering pump (1) is designed in a manner integrable with a lubricant container to a constructional unit.

18. Metering pump (1) as claimed in claim 17, **characterized in that** the lubricant container (18) is exchangeably attached at the metering pump (1).

19. Metering pump (1) as claimed in one of claims 17 to 18, **characterized in that** the lubricant container (18) is attached in an air-tight manner at the metering pump (1).

20. Metering pump (1) as claimed in one of claims 17 to 19, **characterized in that** the lubricant container (18) comprises a reservoir volume (22) whose size enables a substantially uninterruptible metering process over at least five years.

21. Metering pump (1) as claimed in one of claims 1 to 16, **characterized in that** the metering pump (1) comprises a lubricant container (18) which is integrated within the housing (2) of the metering pump (1).

22. Metering pump (1) as claimed in claim 21, **characterized in that** the lubricant container (18) comprises a reservoir volume (22) connected to the cylinder (3).

23. Metering pump (1) as claimed in one of claims 21 to 22, **characterized in that** the metering piston (4) is at least partially enclosed by the lubricant container (18).

24. Metering pump (1) as claimed in one of claims 21 to 23, **characterized in that** a piston (24) loaded substantially in the direction of the reservoir volume (22) is movably arranged within the lubricant container (18).

25. Metering pump (1) as claimed in one of claims 21 to 24, **characterized in that** the piston (24) is arranged movably around a cylinder housing (54).

26. Metering pump (1) as claimed in one of claims 21 to 25, **characterized in that** the piston (24) is formed as a ring piston.

27. Metering pump (1) as claimed in one of claims 21 to 26, **characterized in that** the metering pump (1) comprises a lubricant inlet (51) through which lubricant can be conducted from the outside into the reservoir volume (22).

28. Metering pump (1) as claimed in one of the above-mentioned claims, **characterized in that** the operating means (5) is accommodated in a heat-insulated manner in a housing (2) made of a material with a low heat conductivity.

29. Metering pump (1) as claimed in claim 14, **characterized in that** the movement transfer element (36) is made of a material with a low heat conductivity.

30. Lubricant container (18) comprising a reservoir volume (22) at least partially filled by lubricant, and comprising a holding means (17), **characterized in that** the reservoir volume (22) is designed in a manner exchangeably attached through the attachment device (17) substantially air-tight at a metering pump (1) according to one of claims 1 to 16.

31. Lubricant container (18) as claimed in claim 30, **characterized in that** the holding means (17) is formed as a bayonet.

32. Lubricant container (18) as claimed in claim 30 or 31, **characterized in that** a piston (22) loaded by a spring element (25) in the direction of the reservoir volume (22) is integrated into the lubricant container (18).

33. Lubricant container (18) as claimed in one of claims 30 to 32, **characterized in that** a lubricant quantity is accommodated in the reservoir volume (22), said lubricant quantity enabling an operation of the metering pump (1) for at least five years.

34. Lubricant container (18) as claimed in one of claims 30 to 33, **characterized in that** a discharge opening (20) of the reservoir volume (22) is locked by a closure element (26) prior to the first use at the metering pump (1) and that the closure element (26) cooperates with an opening means (27) of the metering pump and exposes the discharge opening (20) when the lubricant container (18) is set onto the metering pump (1).

## Revendications

1. Pompe doseuse (1) permettant une alimentation dosée d'une quantité prédéterminée de lubrifiant à un point de lubrification, comportant au moins un piston de dosage (4) qui peut être entraîné par un dispositif d'actionnement (5), dans laquelle une section, remplie de lubrifiant en service, d'un cylindre (3) de la pompe doseuse (1) dans lequel se déplace le piston de dosage (4) sert de chambre de dosage où la quantité de lubrifiant à doser doit être reçue, et dans laquelle une course (H) du piston de dosage (4) est limitée par une butée (37), **caractérisée en ce que** le dispositif d'actionnement (5) comporte au moins un élément chauffant (8) et un élément en matière expansible (6, 7) chauffable par l'élément chauffant (8), et **en ce que** la butée est agencée dans la zone d'un contour de réception (3c) du cylindre (3).

2. Pompe doseuse (1) selon la revendication 1, **caractérisée en ce qu'**un dispositif de rappel (10) qui permet de procurer une force de rappel (R) agissant en sens opposé au dispositif d'actionnement (5) est pourvu.

3. Pompe doseuse (1) selon la revendication 2, **caractérisée en ce que** le dispositif de rappel (10) comporte au moins un élément de ressort.

4. Pompe doseuse (1) selon la revendication 2, **caractérisée en ce que** le dispositif de rappel (10) comporte un élément en matière expansible.

5. Pompe doseuse (1) selon l'une des revendications précédentes, **caractérisée en ce que** l'élément chauffant (8) comporte au moins un élément à thermistance CTP.

6. Pompe doseuse (1) selon l'une des revendications précédentes, **caractérisée en ce que** le piston de dosage (4) est logé dans un cylindre (3) de façon à pouvoir se déplacer et avec un jeu, et peut obturer le cylindre (3) de manière étanche au lubrifiant.

7. Pompe doseuse (1) selon l'une des revendications 1 à 5, **caractérisée en ce que** le piston de dosage (4) est logé dans un cylindre (3) de façon à pouvoir se déplacer, et **en ce qu'**au moins un élément d'étanchéité (40, 42, 45, 46) élastique en direction radiale est agencé entre le piston de dosage et la paroi interne du cylindre.

8. Pompe doseuse (1) selon la revendication 7, **caractérisée en ce que** l'élément d'étanchéité (40) est agencé entre une embouchure d'une conduite d'alimentation (11) dans le cylindre (3) et le dispositif d'actionnement (5).

9. Pompe doseuse (1) selon l'une des revendications précédentes, **caractérisée en ce que** le piston de dosage (4) est logé dans un cylindre (3) fabriqué selon un procédé de moulage par injection de façon à pouvoir se déplacer.

10. Pompe doseuse (1) selon l'une des revendications précédentes, **caractérisée en ce que** le cylindre (3) et le piston de dosage (4) sont divisés axialement en sections (3a, 3b, 4a, 4b) de différents diamètres.

11. Pompe doseuse (1) selon la revendication 10, **caractérisée en ce que** la conduite d'alimentation est agencée dans la section (3a) du cylindre (3) de plus grand diamètre, et un moyen d'étanchéité est agencé sur la section (4b) du piston de dosage (4) de plus petit diamètre.

12. Pompe doseuse (1) selon l'une des revendications 9 à 11, **caractérisée en ce que** le cylindre (3) est conformé d'une seule pièce avec un boîtier (2) de la pompe doseuse.

13. Pompe doseuse (1) selon l'une des revendications précédentes, **caractérisée en ce qu'**est pourvue une pluralité de pistons de dosage (4) qui sont agencés de manière à pouvoir être actionnés conjointement par le dispositif d'actionnement (5).

14. Pompe doseuse (1) selon la revendication 13, **caractérisée en ce qu'**un élément de transfert de mouvement (36) de connexion rigide en mouvement du piston de dosage (4) est agencé entre le dispositif d'actionnement (5) et la pluralité de pistons de dosage.

15. Pompe doseuse (1) selon l'une des revendications précédentes, **caractérisée en ce qu'**une conduite d'alimentation (11) débouche dans la paroi interne du cylindre, dans la plage de la course (H) du piston de dosage (4), et est pourvue d'un contour de réception dans la section d'embouchure.

16. Pompe doseuse (1) selon l'une des revendications précédentes, **caractérisée en ce que** la pompe doseuse (1) comporte au moins une sortie de lubrifiant (13) et **en ce qu'**un clapet anti-retour (14) est agencé dans la plage de l'au moins une sortie de lubrifiant (13), ledit clapet étant constitué de manière à pouvoir être transféré en position ouverte par le piston de dosage (4) déplacé par le dispositif d'actionnement (5).

17. Pompe doseuse (1) selon l'une des revendications précédentes, **caractérisée en ce que** la pompe doseuse (1) est constituée de manière à pouvoir être intégrée en une seule unité structurelle avec un réservoir de lubrifiant.

18. Pompe doseuse (1) selon la revendication 17, **caractérisée en ce que** le réservoir de lubrifiant (18) est monté de manière amovible sur la pompe doseuse (1).

19. Pompe doseuse (1) selon l'une des revendications 17 à 18, **caractérisée en ce que** le réservoir de lubrifiant (18) est monté de manière étanche à l'air sur la pompe doseuse (1).

20. Pompe doseuse (1) selon l'une des revendications 17 à 19, **caractérisée en ce que** le réservoir de lubrifiant (18) comporte un volume de réserve (22) dont la dimension permet un processus de dosage essentiellement ininterrompu durant au moins cinq ans.

21. Pompe doseuse (1) selon l'une des revendications 1 à 16, **caractérisée en ce que** la pompe doseuse (1) comporte un réservoir de lubrifiant (18) qui est intégré dans le boîtier (2) de la pompe doseuse (1).

22. Pompe doseuse (1) selon la revendication 21, **caractérisée en ce que** le réservoir de lubrifiant (18) comporte un volume de réserve (22) qui est connecté au cylindre (3).

23. Pompe doseuse (1) selon l'une des revendications 21 à 22, **caractérisée en ce que** le piston de dosage (4) est entouré par le réservoir de lubrifiant (18) sur au moins une section.

24. Pompe doseuse (1) selon l'une des revendications 21 à 23, **caractérisée en ce qu'**un piston précontraint (24) est agencé de manière mobile essentiellement en direction du volume de réserve (22) dans le réservoir de lubrifiant (18).

25. Pompe doseuse (1) selon l'une des revendications 21 à 24, **caractérisée en ce que** le piston (24) est agencé de manière mobile autour d'un boîtier de cylindre (54).

26. Pompe doseuse (1) selon l'une des revendications 21 à 25, **caractérisée en ce que** le piston (24) est constitué comme un piston annulaire.

27. Pompe doseuse (1) selon l'une des revendications 21 à 26, **caractérisée en ce que** la pompe doseuse (1) comporte une entrée de lubrifiant (51) par laquelle le lubrifiant peut être alimenté depuis l'extérieur dans le volume de réserve (22).

28. Pompe doseuse (1) selon l'une des revendications précédentes, **caractérisée en ce que** le dispositif d'actionnement (5) est logé avec une isolation thermique dans un boîtier (2) constitué en un matériau à plus faible conductivité thermique.

29. Pompe doseuse (1) selon la revendication 14, **caractérisée en ce que** l'élément de transfert de mouvement (36) est fabriqué en un matériau à plus faible conductivité thermique.

30. Réservoir de lubrifiant (18) avec un volume de réserve (22) au moins partiellement rempli de lubrifiant et avec un dispositif de retenue (17), **caractérisé en ce que** le volume de réserve (22) est conformé de manière à pouvoir être monté de manière amovible et essentiellement étanche à l'air à l'aide du dispositif de fixation (17) sur une pompe doseuse (1) selon l'une des revendications 1 à 16.

31. Réservoir de lubrifiant (18) selon la revendication 30, **caractérisé en ce que** le dispositif de retenue (17) est conformé comme une baïonnette.

32. Réservoir de lubrifiant (18) selon la revendication 30 ou 31, **caractérisé en ce qu'**un piston (24) précontraint en direction du volume de réserve (22) par un élément de ressort (25) est intégré dans le réservoir de lubrifiant (18).

33. Réservoir de lubrifiant (18) selon l'une des revendications 30 à 32, **caractérisé en ce qu'**une quantité de lubrifiant permettant un fonctionnement de la pompe doseuse (1) durant au moins cinq ans est comprise dans le volume de réserve (22).

34. Réservoir de lubrifiant (18) selon l'une des revendications 30 à 33, **caractérisé en ce qu'**un orifice de sortie d'alimentation (20) du volume de réserve (22) est obturé par un élément d'obturation (26) avant la première utilisation de la pompe doseuse (1), et **en ce que** l'élément d'obturation (26) interagit avec un dispositif d'ouverture (27) de la pompe doseuse (1) et libère l'orifice de sortie d'alimentation (20) lorsque
le réservoir de lubrifiant (18) est placé sur la pompe doseuse (1).
